# EUROPÄISCHE PATENTSCHRIFT

(11) **EP 1 035 045 B1**
(45) Veröffentlichungstag und Bekanntmachung des Hinweises auf die Patenterteilung: **21.07.2004**
(21) Anmeldenummer: 00102686.3
(22) Anmeldetag: 09.02.2000
(51) Int. Cl.: B65G 1/137

(54) **Anlage zur Warenkommissionierung, insbesondere zur Kommissionierung von Lebensmitteln in rechteckigen Paketgebinden**
Installation for commissioning goods, particularly for commissioning rectangular packages containing food
Installation pour commissionner des marchandises, notamment pour commissionner d'emballages rectangulaires contenant des aliments

(30) Priorität: 12.02.1999 DE 19905967
(43) Veröffentlichungstag der Anmeldung: 13.09.2000
(73) Patentinhaber: Dynamic Systems Engineering bv, 7005 BK Doetinchem (NL)
(72) Erfinder: Hollander, R. R., 7251 KC Vorden (NL)
(74) Vertreter: Christophersen & Partner

(56) Entgegenhaltungen:
- WO-A-98/06646
- DE-A- 4 021 665
- DE-C- 3 823 540
- US-A- 4 212 381

## Beschreibung

Die Erfindung betrifft eine Anlage zur Warenkommissionierung, insbesondere zur Kommissionierung von Lebensmitteln in rechteckigen Paketgebinden, gemäß dem Oberbegriff des Anspruchs 1.

Die Kommissionierlagertechnik gewinnt in allen Bereichen des Handels und insbesondere auch im Lebensmittelgroßhandel an Bedeutung. Allerdings büßt die Lagertechnik im engeren Sinne, d. h. die statische Lagerung der einzelnen Stückgüter, eher an Bedeutung ein, wohingegen die dynamischen Prozesse und in erster Linie das Umschlagen der Güter an Bedeutung gewinnt. Ziel einer modernen Lagertechnik ist es daher, die Verweildauer der einzelnen Stückgüter in dem Lager und damit die mit der Einlagerung verbundene Kapitalbindung so gering wie möglich zu halten.

Die in der Lebensmittelbranche verwendeten, teilautomatisierten Anlagen zur Warenkommissionierung sind zumeist als mehrstöckige Regalkonstruktionen mit nebeneinander und übereinander angeordneten Lagergassen für die Stückgüter ausgebildet. Die Böden der so gebildeten Lagergassen sind mit Rollenbahnen aus frei drehbaren Rollen versehen und leicht geneigt, so daß die an dem einen Ende der Lagergassen, der sogenannten Beschickungs- oder Bestückungsseite, eingelagerten Waren unter ihrer eigenen Schwerkraft entlang den Rollenbahnen zum anderen Ende der Lagergasse, der Entnahme- bzw. Kommissionierseite, laufen. Die Einlagerung der Warengebinde auf der Beschickungsseite erfolgt von Hand, indem die einzelnen Stückgüter von einer gleichartige Stückgüter aufnehmenden Palette entnommen und in die jeweils zugewiesene Lagergasse eingeschoben werden. Auch das Kommissionieren an der Entnahmeseite solcher Kommissionierregale erfolgt in der Lebensmittelbranche noch von Hand.

In vielen Fällen werden aber nicht einmal Rollenbahnen für die Transportpaletten eingesetzt, vielmehr werden die Transportpaletten zunächst in mehrstöckigen Regalen zwischengelagert, wobei in die unterste, für Mitarbeiter frei zugängliche Ebene des Regals jeweils jene Transportpalette eingelagert wird, von der gerade kommissioniert wird. Ist diese Transportpalette leer, wird sie mittels eines in dem Gang zwischen den Regalen verfahrbaren Förderfahrzeuges durch eine der oberhalb vorrätig gehaltenen, befüllten Transportpaletten ersetzt. In denselben Gängen zwischen den Regalen, in denen sich die Flurförderfahrzeuge bewegen, ist auch das die Kommissionen zusammenstellende Personal unterwegs, was zu einer gegenseitigen Behinderung und damit einer geringen Effizienz beim Kommissionieren führt.

Bekannt sind schließlich auch Regale mit einer Beschickungsseite und einer Kommissionierseite, bei denen rechnergesteuerte Entnahmevorrichtungen in Gestalt von Fördergeräten in einem auf der Kommissionierseite des Regals angeordneten Gang verfahrbar sind. Die Fördergeräte übernehmen entsprechend dem Kommissionierauftrag die in den quer verlaufenden Lagergassen vorrätig gehaltenen Warengebinde und stellen diese zu einem Auftrag zusammen. Die hierzu verwendeten Fördergeräte sind über entsprechende Führungen in zwei Koordinaten verfahrbar, so daß von jedem Fördergerät jede der übereinander und nebeneinander angeordneten Lagergassen einzeln angefahren werden kann. Die hierbei von den Fördergeräten zurückgelegten Wegstrecken sind allerdings sehr groß, weshalb eine solche Kommissionieranlage für das schnelle Zusammenstellen einer Vielzahl unterschiedlicher Warengebinde und damit für die Erzielung hoher Umschlagraten nicht geeignet ist. Gerade im Lebensmittelbereich sind jedoch die Umschlagraten besonders hoch, und dies bei einer in der Regel besonders großen Zahl unterschiedlicher Warengebinde pro Kommission.

Eine Anlage der eingangs genannten Art zur Warenkommissionierung von Tiefkühl-Lebensmitteln ist aus der WO 98/06646 bekannt. Der Weg des Warenflusses zwischen einem Wareneingang für angelieferte Transportpaletten und einem Warenausgang für entsprechend dem Kommissionauftrag zusammengestellte Transportgebinde folgt im wesentlichem einem "U" mit einem Hinstrang sowie einem dazu parallelen Rückstrang. Neu eingetroffene Warenpaletten werden zunächst hinter dem Wareneingang in einem Palettenlager abgestellt. Daran schließt sich, ebenfalls auf dem Hinstrang des Warenflusses, eine Depalettierzone an, in welcher die einzelnen Warengebinde von den Paletten entnommen und in speziell gestaltete Lagerwannen gelegt werden. Die nach Warengruppen geordneten Lagerwannen gelangen anschließend in eine Kommissionierzone, welche sich ebenfalls auf dem Hinstrang des Warenflusses befindet. In der Kommissionierzone erfolgt von Hand die Entnahme der einzelnen Waren aus den Warenwannen und deren Zusammenstellung zu den georderten Kommissionen. Die so zu Kommissionsaufträgen zusammengestellten Waren gelangen über verschiedene Fördereinrichtungen in einen Sorter mit einer Vielzahl davon abzweigender Speicherrutschen. Die jeweils einer Kommission angehörenden Waren werden gemeinsam von dem Sorter in eine der Speicherrutschen befördert, aus der sie dann zum Zwecke des Versandes abrufbar sind. Da sich der Sorter bereits auf dem Rückstrang des Warenflusses befindet, erfolgt zwischen Kommissionierzone und Sorter eine Umlenkung des Warenflusses um 180°.

Das Layout der Kommissionieranlage nach der WO 98/06646 ist deutlich durch Anforderungen geprägt, welche an die Behandlung von empfindlicher Tiefkühlkost gestellt werden. So sind größere Bereiche der Anlage ais Kühlkammern mit einer konstanten Gefriertemperatur ausgelegt. Weniger Bedeutung kommt der Bevorratung einer ausreichenden Zahl seitens des Lebensmittelherstellers gelieferter, beladener Warenpaletten zu. An dem heutzutage insgesamt gehandelten Lebensmittelsortiment machen Tiefkühlwaren nur einen relativ geringen Anteil aus. Für das heutige, stark differenzierte Lebensmittelsortiment in seiner Gesamtheit bietet die Anlage zur Warenkommissionierung nach der WO 98/06646 daher keine geeignete Lösung.

Aus der DE 38 23 540 C1 ist ein Durchlauflager für Stückgüter bekannt. Der Warenfluß der Stückgüter zwischen der Einförderung in das Stückgutlager und der Ausförderung aus dem Stückgutlager, einschließlich der eigentlichen Lagerung in Hochregalen folgt im wesentlichen einem "U". Weitergehende Hinweise zur Behandlung einzelner Stückgüter oder zu einer etwaigen Kommissionierung finden sich in dieser Druckschrift nicht.

Der Erfindung liegt die **Aufgabe** zugrunde, eine Anlage zur Warenkommissionierung zu schaffen, mit der sich bei geringem Flächenbedarf hohe Umschlagraten auch dann erzielen lassen, wenn die zusammengestellten Kommissionen regelmäßig eine Vielzahl unterschiedlicher Waren bzw. Warengebinde aufweisen.

Zur **Lösung** wird eine gattungsgemäße Anlage zur Warenkommissionierung mit den in Anspruch 1 angegebenen kennzeichenden Merkmalen vorgeschlagen.

Zur Erzielung einer gleichmäßigen Auslastung der zur Verfügung stehenden Grundfläche ist die Aufteilung des Lagerbereiches einerseits und des von diesem getrennten Kommissionbereiches andererseits von Bedeutung. Hierzu wird mit der Erfindung vorgeschlagen, daß sich der Kommissionierbereich ausschließlich auf dem Rückstrang befinded. Erfolgt also auf dem Hinstrang die vorläufige Lagerung der vom Lebensmittelhersteller kommenden Transportpaletten, erfolgt die anschließende Kommissionierung in einem im wesentlichen richtungsmäßig entgegengesetzten Warenstrom, d. h., bezogen auf den insgesamt im wesentlichen U-förmigen Weg des Warenflusses, auf dessen Rückstrang. Diese Art des Warenflusses erfordert einen "Wendepunkt", an dem der Hinstrang in den Rückstrang übergeht. Im Rahmen der Erfindung ist von Bedeutung, daß dieser Wendepunkt erreicht ist, bevor die Waren in das Kommissionierlager gelangen, wo sie automatisch zu den angeforderten Kommissionen zusammengestellt werden.

Die von den Lebensmittelherstellern mit jeweils gleichartigen Waren beladenen Transportpaletten befinden sich dabei ausschließlich in dem Lagerbereich, wohingegen im Kommissionierbereich die Waren bzw. Paketgebinde bereits vereinzelt sind, so daß diese, ebenfalls im Kommissionierbereich, vollautomatisch entsprechend dem jeweiligen Auftrag zu Kommissionen zusammengestellt werden. Dies ermöglicht hohe Umschlagraten auch dann, wenn, was in der Lebensmittelbranche häufig der Fall ist, die zusammengestellten Kommissionen eine Vielzahl unterschiedlicher Waren bzw. Warengebinde aufweisen.

Der Kommissionierbereich setzt sich zusammen aus
- einem Kommisionierlager mit einer Vielzahl sich darin parallel zueinander erstreckender Lagergassen für die zu kommisionierenden Waren, wobei sich in jeder Gasse nur gleichartige Waren befinden,
- einem Bestückungsbereich am einen Ende der Lagergasse mit Mitteln zur Einlagerung neuer Waren in die zugehörigen Lagergassen und
- Entnahmevorrichtungen am anderen Ende der Lagergassen zur rechnergesteuerten Überführung einzelner Waren aus den Lagergassen auf nachgeordnete Fördereinrichtungen, wobei jede Lagergasse mit einer eigenen, unabhängig von den übrigen Entnahmevorrichtungen betätigbaren Entnahmevorrichtung versehen ist.

Mit einem so gestalteten Kommisionierbereich lässt sich eine sehr hohe Umschlagrate erzielen, da jede einzelne Lagergasse mit einer eigenen Entnahmevorrichtung versehen ist, die unabhängig von den übrigen Entnahmevorrichtungen rechnergesteuert betätigbar ist. Es wird eine sehr hohe Umschlaggeschwindigkeit erzielt, die es bei voller Ausnutzung sogar ermöglichen würde, Waren aus sämtlichen Lagergassen gleichzeitig zu entnehmen und zu einem Kommisionsauftrag zusammenzustellen.

Zwischen dem Lagerbereich mit den noch mit einheitlichen Waren beladenen Transportpaletten und dem Kommissionierbereich müssen die auf den Transportpaletten zusammengefaßten Waren bzw. Paketgebinde vereinzelt werden. Dies wird durch eine im Warenfluß zwischen Lagerbereich und Kommissionierbereich angeordnete Entpalettierstation zum Entladen der dem Lagerbereich entnommenen Transportpaletten erreicht.

Um eine optimale Ausnutzung der zur Verfügung stehenden Fläche zu erzielen, kann die Entpalettierstation gemeinsam mit dem Kommissionierbereich auf dem Rückstrang des U-förmigen Weges des Warenflusses angeordnet sein. In diesem Fall befindet sich der Lagerbereich auf dem Hinstrang, wohingegen Entpalettierstation und Kommissionierbereich zusammen auf dem Rückstrang des insgesamt U-förmigen Warenflusses liegen.

Mit einer weiteren Ausgestaltung wird vorgeschlagen, dass die Mittel zur Einlagerung neuer Waren in die Lagergassen mit dem Bahnabschnitt der von der Entpalletierstation zu dem Kommissionierlager führenden Transportbahn zusammenwirken.

Der Abtransport der im Rahmen des Kommissionsauftrages den Lagergassen entnommenen Warengebinde erfolgt vorzugsweise über eine dauernd angetriebene Fördereinrichtung, die sich entlang den Entnahmevorrichtungen und quer zu den Lagergassen erstreckt.

Mit einer bevorzugten Ausgestaltung wird femer vorgeschlagen, daß die Lagergassen geneigte, zu den Entnahmevorrichtungen hin abfallende Rollenbahnen sind, die sich quer zu dem Rückstrang des Warenflusses erstrecken.

Schließlich wird mit der Erfindung vorgeschlagen, daß die Fördereinrichtung für entnommene Waren zu mindestens einem langgestreckten Packtisch führt, der sich quer zu dem Rückstrang des Warenflusses erstreckt.

Einzelheiten einer erfindungsgemäßen Anlage zur Warenkommissionierung werden nachfolgend anhand eines Ausführungsbeispieles erläutert, welches auf den Zeichnungen dargestellt ist. Darin zeigen:
- Fig. 1: in stark vereinfachter Gesamtdarstellung eine Draufsicht auf eine in einem Gebäude untergebrachte Anlage zur Warenkommissionierung und insbesondere zur Kommissionierung von Lebensmitteln;
- Fig. 2: in gegenüber Fig. 1 vergrößerter und mehr Einzelheiten wiedergebender Draufsicht eines der Module der Anlage und
- Fig. 3: in perspektivischer Darstellung einen Teil des Kommissionierbereichs der Anlage, wobei dieser Teil in Fig. 2 mit III bezeichnet ist.

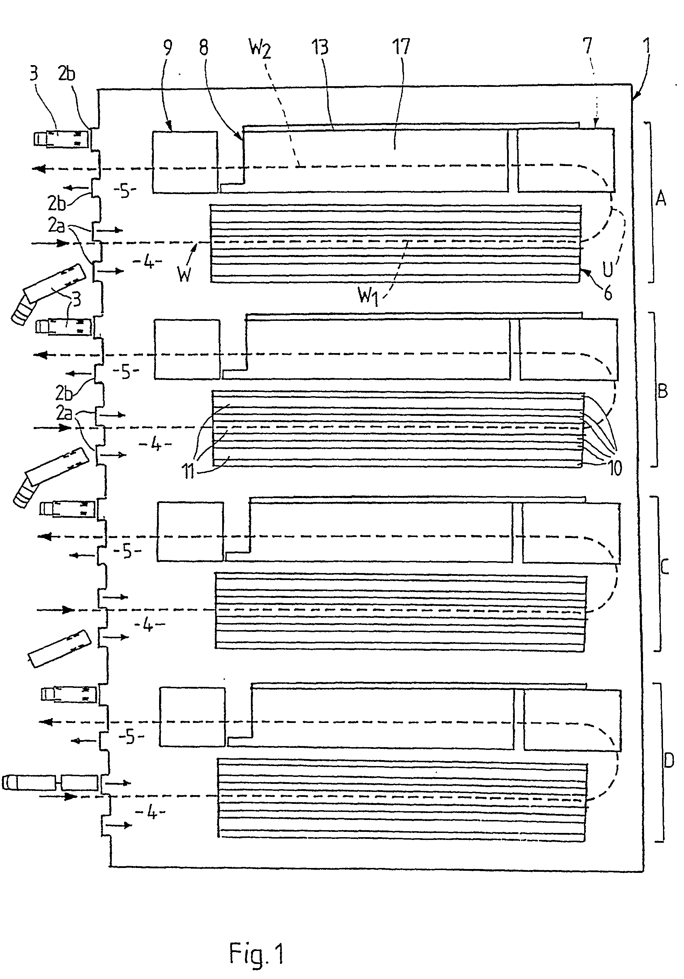

Fig. 1 zeigt die Anlage zur Warenkommissionierung in ihrer Gesamtheit. Diese befindet sich in einer großen rechteckigen Halle 1, entlang deren einer Längsseite Tore mit An- und Abfahrbühnen 2a, 2b für Lastkraftwagen 3 angeordnet sind. Fig. 1 läßt insbesondere erkennen, daß die Anlage sich aus insgesamt vier gleichartigen Modulen A, B, C, D zusammensetzt. Die Module sind nebeneinander angeordnet, wobei zu jedem Modul A, B, C, D Anfahrbühnen 2a für die Anlieferung neuer Waren, und Abfahrbühnen 2b für den Abtransport der zu Kommissionen zusammengestellten Waren gehören. Die nachfolgenden Ausführungen gelten gleichermaßen für jedes der Module A, B, C, D.

Mit W ist in Fig. 1 der gestrichelt dargestellte Warenfluß dargestellt, der sich in jedem der Module einstellt. Zu erkennen ist, daß der Warenfluß W im wesentlichen der Form eines "U" folgt mit einem von dem Wareneingang 4 hinter der Anfahrbühne 2a ausgehenden Hinstrang W₁ und einem Rückstrang W₂, der am Warenausgang 5 vor der Abfahrbühne 2b endet. Der Umkehrpunkt U des Warenflusses befindet sich an der dem Wareneingang 4 und dem Warenausgang 5 abgewandten Seite der Halle 1.

Selbstverständlich ist mit der Charakterisierung des Warenflusses W als U-förmig nicht gemeint, daß sämtliche Transportpaletten bzw. Warengebinde exakt einem so vorgezeichneten Weg folgen; gemeint ist vielmehr eine verallgemeinerte Umschreibung jenes Weges, den die zunächst von den Lebensmittelherstellern angelieferten Waren zurücklegen, bis diese, nach Aufträgen kommissioniert und zu geeigneten Transportgebinden zwecks Belieferung des jeweiligen Lebensmittel-Supermarktes zusammengestellt, die Anlage wieder verlassen. Dabei ist es durchaus zulässig, daß die Waren, was nachfolgend noch näher dargestellt werden wird, teilweise Wege schräg oder quer zum Warenfluß W zurücklegen. Auch erfolgt der Transport nicht nur in einer horizontalen Ebene, sondern zum Teil auch in mehreren horizontalen Ebenen übereinander. Ausgeschlossen ist jedoch, daß der Warenfluß entlang des Hinstrangs W₁ den Warenfluß entlang des Rückstrangs W₂ kreuzt.

Die einzelnen Stationen des Warenflusses W werden nachfolgend kurz anhand der Fig. 1 erläutert. Die neu eingetroffenen Transportpaletten gelangen vom Wareneingang 4 zunächst in einen Lagerbereich 6, der sich ebenfalls auf dem Hinstrang W₁ befindet. Die aus dem Lagerbereich 6 entnommenen Transportpaletten gelangen dann in eine Entpalettierstation 7, die sich beim Ausführungsbeispiel bereits auf dem Rückstrang W₂ des Warenflusses W befindet. Dort werden die Transportpaletten entladen, die einzelnen Waren bzw. Warengebinde gelangen anschließend in einen Kommissionierbereich 8, der sich ausschließlich auf dem Rückstrang W₂ befindet. Die vereinzelten und zu Kommissionen zusammengestellten Waren gelangen schließlich aus dem Kommissionierbereich 8 in einen Versandbereich 9, an den sich der Warenausgang 5 und die Abfahrbühne 2b anschließen. Entpalettierstation 7, Kommissionierbereich 8 und Versandbereich 9 liegen auf dem Rückstrang W₂ des Warenflusses W, erstrecken sich also im wesentlichen parallel, jedoch in Bezug auf den Förderfluß entgegengesetzt zu dem Lagerbereich 6.

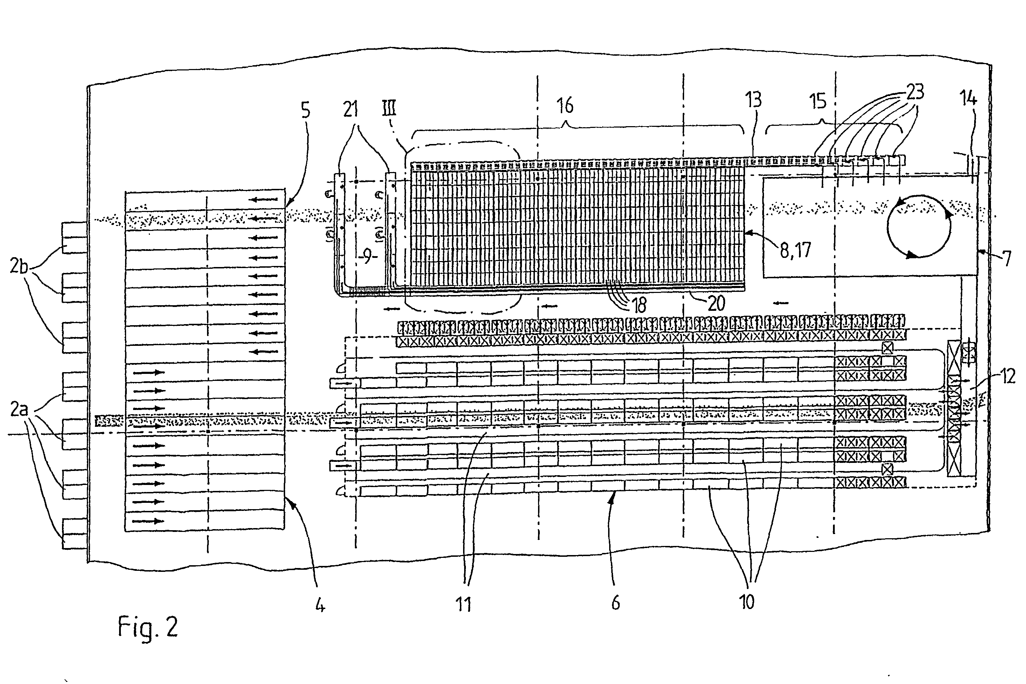

Einzelheiten jedes der Module werden nachfolgend anhand der Fig. 2 erläutert. Im Wareneingang 4 erfolgt eine Kontrolle der eintreffenden, vom Lebensmittelhersteller mit jeweils gleichartigen Waren beladenen Transportpaletten. Hierbei handelt es sich um die üblichen, in Industrie und Handel weit verbreiteten Industriepaletten. Jede Transportpalette kann mit einer geeigneten Kennzeichnung versehen sein, so daß anschließend deren automatischer Transport innerhalb des Lagerbereichs 6 möglich ist. Im Lagerbereich 6 werden die Transportpaletten auf Regalen 10, die sich beidseits von Fördergassen 11 befinden, abgesetzt. Die Regale 10 sind mehrstöckig ausgebildet, und werden mittels vollautomatischer, in den Gängen 11 beweglicher Bediengeräte be- und entladen. Jeder Gang 11 ist gerade so schmal, daß in jedem ein solches Bediengerät rechnergesteuert hin- und herfahren kann. Sämtliche Gänge 11 erstrecken sich parallel zueinander und exakt parallel zu dem Hinstrang W₁ gemäß Fig. 1.

Die rechnerunterstützte Lagerung der beladenen Transportpaletten auf den Regalen 10 des Lagerbereichs 6 erfolgt chaotisch, d. h. es findet kein Absetzen der Paletten entsprechend der jeweiligen Warengruppe statt, sondern die Ablage erfolgt ausschließlich nach Kriterien der Umschlaggeschwindigkeit sowie des zur Verfügung stehenden Platzes sowie der Zugriffszeit zu den einzelnen Lagerfächern des Regals 10.

Transportpaletten, die aus den Regalen 10 entnommen werden, werden anschließend von dem jeweiligen Bediengerät auf einem Querförderer 12 abgesetzt. Der Querförderer 12 transportiert die noch beladenen Transportpaletten in die Entpalettierstation 7. Diese Bewegung innerhalb des Warenflusses entspricht dem Umkehrpunkt U nach Fig. 1.

In der Entpalettierstation 7 werden die Transportpaletten zunächst von der umgebenden Schrumpffolie oder Stretchfolie befreit. Anschließend wird jede Transportpalette einzeln entladen, wobei die so vereinzelten Waren bzw. Paketgebinde auf einer Transportbahn 13 abgesetzt werden. Die Entpalettierung und Übergabe auf die Transportbahn 13 erfolgt vorzugsweise mittels eines an sich bekannten Entpalettier-Roboters. Dieser erkennt die Lage der einzelnen Pakete auf der Transportpalette, ergreift diese und setzt sie anschließend auf der Transportbahn 13 ab. Nachdem die Transportpalette entleert ist, gelangt diese über einen Ausgang 14 aus der Entpalettierstation 7 heraus. Falls eine vollständige Entladung der Transportpalette nicht erforderlich oder möglich ist, kann diese als teilbeladene Palette wieder über den Querförderer 12 zurück in den Lagerbereich 6 gelangen, um dann zu einem späteren Zeitpunkt vollständig entladen zu werden.

Die vereinzelten Waren bzw. Paketgebinde gelangen über die Transportbahn 13 zu dem Kommissionierbereich 8. Hierzu verläuft die Transportbahn 13 in Richtung des Rückstranges W₂ nach Fig. 1, wobei sich ein erster Bahnabschnitt 15 der Transportbahn 13 entlang der Entpalettierstation 7, und ein zweiter Bahnabschnitt 16 der Transportbahn 13 entlang des Kommissionierbereiches 8 erstreckt. Zumindest der zweite Bahnabschnitt 16 ist eine Rollenbahn mit angetriebenen Transportrollen.

Der überwiegende Teil des Kommissionierbereiches 8 wird durch ein Kommissionierlager 17 eingenommen, welches aus einer Vielzahl sich parallel zueinander erstreckender Lagergassen 18 für die zu kommissionierenden Waren besteht. In jeder Lagergasse 18 befinden sich nur gleichartige Waren. Die Lagergassen 18 sind, ausgehend von der Transportbahn 13, geneigt und mit Rollenbahnen versehen, so daß die von der Transportbahn 13 in die Lagergassen 18 gelangenden Waren unter Schwerkrafteinfluß entlang der Lagergassen 18 bis an deren anderes Ende rollen. Bremseinrichtungen in den Lagergassen 18 verhindern, daß die Rollgeschwindigkeit der Waren bzw. Paketgebinde entlang der Lagergassen 18 zu groß wird.

Die Überführung der Waren von der Transportbahn 13 in die jeweils ausgewählte Lagergasse 18 erfolgt mittels eines Querförderers 16a. Vorzugweise befindet sich vor jeder Lagergasse 18 ein eigener Querförderer 16a, der die für diese Lagergasse bestimmten Waren in den Anfang der Lagergasse 18 hineinbefördert.

Am anderen, unteren Ende der Lagergasse 18 werden die Waren entsprechend dem vorgegebenen Kommissionsauftrag einzeln entnommen. Hierzu ist jede Lagergasse 18 mit einer eigenen Entnahmevorrichtung 19 versehen, die unabhängig von den Entnahmevorrichtungen der übrigen Lagergassen 18 ansteuerbar ist. Die durch Ansteuerung der entsprechenden Entnahmevorrichtung 19 abgegebene Ware gelangt auf eine Fördereinrichtung 20, die quer zu den Lagergassen 18 verläuft und zu Packtischen 21 führt.

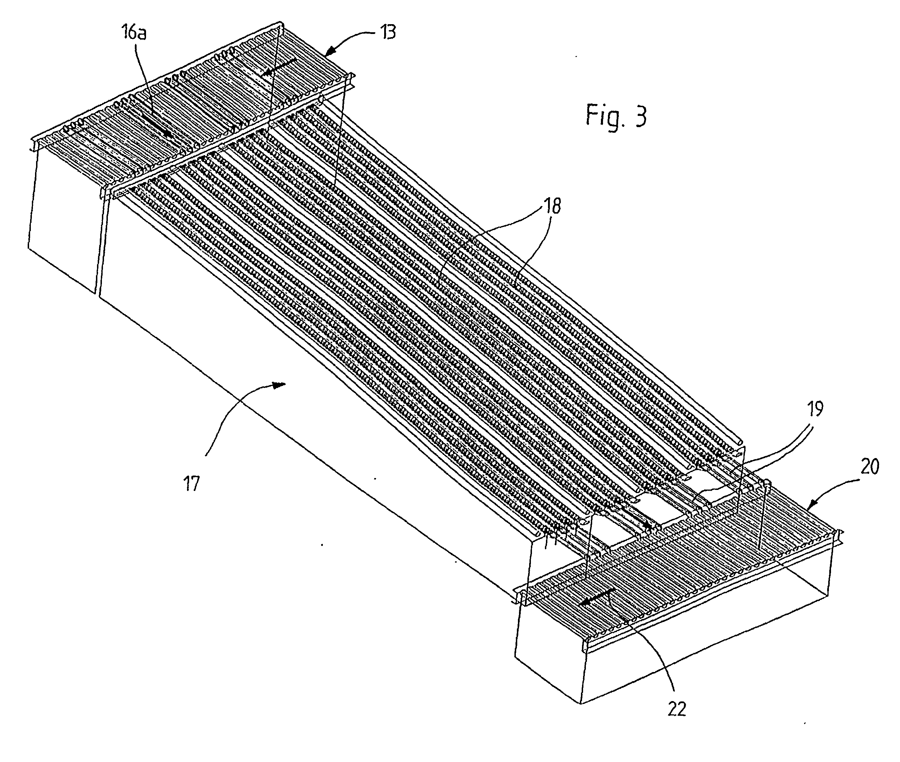

In der Fig. 3 sind Einzelheiten des Kommissionierlagers 17 dargestellt, einschließlich der Querförderer 16a, der geneigten Lagergassen 18, der Entnahmevorrichtungen 19 und der gemeinsamen Fördereinrichtung 20. Zu erkennen ist, daß sich die Fördereinrichtung 20, ebenso wie die Transportbahn 13, aus angetriebenen Rollen zusammensetzt. Die Transportrichtung 22 der langgestreckten Fördereinrichtung 20 ist gleich der Transportrichtung der oberhalb angeordneten Transportbahn 13, jedoch parallel versetzt dazu. Außerdem befindet sich die Fördereinrichtung 20 näher an dem Lagerbereich 6, als die Transportbahn 13. Die Lagergassen 18 erstrecken sich demgemäß quer zu Transportbahn 13 und Fördereinrichtung 20 und damit auch quer zu dem Rückstrang W₂ gemäß Fig. 1.

Beim Ausführungsbeispiel führt die Fördereinrichtung 20 in mehreren Endsträngen zu den Packtischen 21, wobei die Packtische 21 parallel zu den Lagergassen 18 des Kommissionierlagers 17 ausgerichtet sind. Die auf den Packtischen 21 ankommenden Paketgebinde des jeweiligen Kommissionierauftrages werden dort von Personal entnommen, und zu Transportgebinden zusammengestellt. Diese gelangen dann zu dem Warenausgang 5, wo noch eine Warenausgangskontrolle erfolgen kann.

In jeder der Lagergassen 18 des Kommissionierlagers 17 befinden sich ausschließlich gleichartige Waren. Wird daher in der Entpalettierstation 7 eine Transportpalette entladen, gelangen die so vereinzelten Paketgebinde nacheinander über die Transportbahn 13 bis vor die jeweils bestimmte Lagergasse 18 und dann über den dort betätigten Querförderer 16a in die Lagergasse hinein. Nachfolgende Paketgebinde andersartiger Waren werden entsprechend in eine andere Lagergasse 18 hineinbefördert.

Die Kommissionierung der so in den Kommissionierlagern 18 vorrätig gehaltenen Paketgebinde erfolgt durch rechnergesteuerte Betätigung der den einzelnen Lagergassen zugeordneten Entnahmevorrichtungen 19. Dies ermöglicht eine sehr hohe Kommissioniergeschwindigkeit. Bei voller Ausnutzung der Möglichkeiten der Anlage wäre es letztlich sogar möglich, Paketgebinde aus sämtlichen Lagergassen gleichzeitig zu entnehmen und zu einem Kommissionsauftrag zusammenzustellen.

Aus Gründen der Übersicht sind in Fig. 3 die Einzelteile des Kommissionierlagers 17 nur in einer Ebene dargestellt. Tatsächlich jedoch ist es von Vorteil, das Kommissionierlager mehrstöckig anzulegen. Da sich jedoch die Entpalettierstation 7 nur auf einer Ebene befindet, sind die Orte 23, an denen die auf verschiedene Niveaus führenden Transportbahnen 13 beginnen, nebeneinander angeordnet.

### Bezugszeichenliste

- 1: Halle
- 2a: Anfahrbühne
- 2b: Abfahrbühne
- 3: Lastkraftwagen
- 4: Wareneingang
- 5: Warenausgang
- 6: Lagerbereich
- 7: Entpalettierstation
- 8: Kommissionierbereich
- 9: Versandtbereich
- 10: Regale
- 11: Gang
- 12: Querförderer
- 13: Transportbahn
- 14: Ausgang
- 15: erster Bahnabschnitt der Transportbahn
- 16: zweiter Bahnabschnitt der Transportbahn
- 16a: Querförderer
- 17: Kommissionierlager
- 18: Lagergasse
- 19: Entnahmevorrichtung
- 20: Fördereinrichtung
- 21: Packtisch
- 22: Transportrichtung der Fördereinrichtung
- 23: Ort des Beginns der Transportbahn
- A: Modul
- B: Modul
- C: Modul
- D: Modul
- U: Umkehrpunkt
- W: Warenfluß
- W₁: Hinstrang des Warenflusses
- W₂: Rückstrang des Warenflusses

## Patentansprüche

1. Anlage zur Warenkommissionierung, insbesondere zur Kommissionierung von Lebensmitteln in rechteckigen Paketgebinden, mit
einem Wareneingang (4) für seitens des Lebensmittelherstellers mit jeweils gleichartigen Waren beladene Transportpaletten,
einem Warenausgang (5) für versandfertige Transportgebinde mit entsprechend dem Kommissionsauftrag zusammengestellten, unterschiedlichen Waren,
einem dem Wareneingang (4) nachgeordneten Lagerbereich (6) mit Regalen (10) zur Lagerung der beladenen Transportpaletten, und
einem Kommissionierbereich (8) mit Mitteln zur Entnahme einzelner Waren bzw. Paketgebinde sowie zu deren Zusammenstellung zu den Transportgebinden,
wobei der Weg des Warenflusses (W) zwischen Wareneingang (4) und Warenausgang (5) einem Hin- (W₁) und einem dazu parallelen Rückstrang (W₂) ähnlich einem "U" folgt, die freien Enden von Hin- und Rückstrang durch den Wareneingang (4) bzw. den Warenausgang (5) gebildet werden, und sich der Lagerbereich (6) auf dem Hinstrang (W₁) und der Kommissionierbereich (8) auf dem Rückstrang (W₂) befindet, **dadurch gekennzeichnet, daß**
sich der Kommissionierbereich (8) ausschließlich auf dem Rückstrang (W₂) befindet und zusammensetzt aus
einem Kommissionierlager (17) mit einer Vielzahl sich darin parallel zueinander erstreckender Lagergassen (18) für die zu kommissionierenden Waren, wobei sich in jeder Gasse (18) nur gleichartige Waren befinden,
einem Bestückungsbereich am einen Ende der Lagergassen (18) mit Mitteln (16a) zur Einlagerung neuer Waren in die zugehörigen Lagergassen (18) und
Entnahmevorrichtungen (19) am anderen Ende der Lagergassen (18) zur rechnergesteuerten Überführung einzelner Waren aus den Lagergassen (18) auf nachgeordnete Fördereinrichtungen (20), wobei jede Lagergasse (18) mit einer eigenen, unabhängig von den übrigen Entnahmevorrichtungen betätigbaren Entnahmevorrichtung (19) versehen ist, und daß
einer im Warenfluss zwischen Lagerbereich (6) und Kommissionierbereich (8) angeordneten Entpalettierstation (7) zum Entladen der dem Lagerbereich (6) entnommenen Transportpaletten vorgesehen ist.

2. Anlage nach Anspruch 1, **dadurch gekennzeichnet, dass** die Entpalettierstation (7) gemeinsam mit dem Kommissionierbereich (8) auf dem Rückstrang (W₂) des U-förmigen Weges des Warenflusses (W) angeordnet ist.

3. Anlage nach Anspruch 2, **gekennzeichnet durch** mindestens eine von der Entpalettierstation (7) zu dem Kommissionierlager (17) führende, vorzugsweise auf zumindest einem Teil ihrer Länge als Rollenbahn ausgebildete Transportbahn (13) für neu einzulagernde Waren, die sich mit einem Bahnabschnitt (16) entlang dem Kommissionierlager (17) erstreckt.

4. Anlage nach Anspruch 3, **dadurch gekennzeichnet, daß** die Mittel (16a) zur Einlagerung neuer Waren in die Lagergassen mit dem Bahnabschnitt (16) der von der Entpalettierstation (7) zu dem Kommissionierlager (17) führenden Transportbahn (13) zusammenwirken.

5. Anlage nach Anspruch 4, **dadurch gekennzeichnet, daß** das Mittel zur Einlagerung neuer Waren in die Lagergasse (18) ein Querförderer (16a) mit Förderrichtung in Richtung zu der Lagergasse (18) ist.

6. Anlage nach Anspruch 5, **dadurch gekennzeichnet, daß** jeder Lagergasse (18) ein eigener Querförderer (16a) zugeordnet ist.

7. Anlage nach einem der Ansprüche 1 bis 6, **dadurch gekennzeichnet, daß** sich entlang den Entnahmevorrichtungen (19) eine dauernd angetriebene Fördereinrichtung (20) für die aus den Lagergassen (18) entnommenen Waren erstreckt.

8. Anlage nach Anspruch 7, **dadurch gekennzeichnet, daß** sich die Fördereinrichtung (20) näher an dem Lagerbereich (6) befindet, als die zu dem Kommissionierlager (17) führende Transportbahn (13).

9. Anlage nach einem der Ansprüche 1 bis 8, **dadurch gekennzeichnet, daß** die Fördereinrichtung (20) für entnommene Waren zu zumindest einem langgestreckten Packtisch (21) führt, der sich quer zum dem Rückstrang (W₂) des Warenflusses (W) erstreckt.

## Claims

1. Installation for order-picking goods, in particular for order-picking foodstuffs in rectangular packs, having
a goods entrance (4) for transporting pallets which are loaded, on the part of the foodstuff manufacturer with identical goods in each case,
a goods exit (5) for ready-to-dispatch transporting containers with different goods put together in accordance with the order,
a storage region (6) which is arranged downstream of the goods entrance (4) and has racks (10) for storing the loaded transporting pallets, and
an order-picking region (8) with means for removing individual goods or packs and for putting them together to form the transporting containers, it being the case that the route of the goods flow (W) between the goods entrance (4) and goods exit (5) follows an ingoing section (W₁) and an outgoing section (W₂), which is parallel to the latter, in a manner similar to a "U", the free ends of the ingoing section and outgoing section are formed by the goods entrance (4) and the goods exit (5), respectively, and the storage region (6) is located on the ingoing section (W₁) and the order-picking region (8) is located on the outgoing section (W₂),
**characterized in that** the order-picking region (8) is located exclusively on the outgoing section (W₂) and is made up
of an order-picking store (17) with a multiplicity of storage aisles (18), which extend parallel to one another in the said order-picking store and are intended for the goods which are to be order-picked, only identical goods being located in each aisle (18),
of a charging region at one end of the storage aisles (18), with means (16a) for introducing new goods into the associated storage aisles (18), and
of removal apparatus (19) at the other end of the storage aisles (18) for the computer-controlled transfer of individual goods from the storage aisles (18) to the downstream conveying arrangements (20), each storage aisle (18) being provided with a dedicated removal apparatus (19) which can be actuated independently of the rest of the removal apparatuses,
and **in that** there is provided an depalletising station (7) which is arranged, along the course of the goods flow, between the storage region (6) and order-picking region (8) and is intended for unloading the transporting pallets removed from the storage region (6).

2. Installation according to Claim 1, **characterized in that** the depalletising station (7) is arranged, together with the order-picking region (8) on the outgoing section (W₂) of the U-shaped route of the goods flow (W).

3. Installation according to Claim 2, **characterized by** at least one transporting path (13) for goods which are to be newly introduced, this transporting path leading from the depalletising station (7) to the order-picking store (17), being designed as a roller path at least over part of its length and having a path portion (16) extending along the order-picking store (17).

4. Installation according to Claim 3, **characterized in that** the means (16a) for introducing new goods into the storage aisles interact with the path portion (16) of the transporting path (13), which leads from the depalletising station (7) to the order-picking store (17).

5. Installation according to Claim 4, **characterized in that** the means for introducing new goods into the storage aisle (18) is a transverse conveyor (16a) with a conveying direction in the direction of the storage aisle (18).

6. Installation according to Claim 5, **characterized in that** each storage aisle (18) is assigned a dedicated transverse conveyor (16a).

7. Installation according to one of Claims 1 to 6, **characterized in that** a permanently driven conveying arrangement (20) for the goods removed from the storage aisles (18) extends along the removal apparatuses (19).

8. Installation according to Claim 7, **characterized in that** the conveying arrangement (20) is located nearer to the storage region (6) than the transporting path (13), which leads to the order-picking store (17).

9. Installation according to one of Claims 1 to 8, **characterized in that** the conveying arrangement (20) for removed goods leads to at least one elongated packing table (21), which extends transversely to the outgoing section (W₂) of the goods flow (W).

## Revendications

1. Système de préparation des commandes de marchandises, en particulier pour la préparation de commandes de produits alimentaires dans des emballages rectangulaires, comportant
une entrée des marchandises (4) pour des palettes de transport chargées par le fabricant des produits alimentaires avec chacune des marchandises de même type,
une sortie de marchandises (5) pour les emballages de transport prêts à l'expédition avec des marchandises différentes, de composition correspondant à la commande,
une zone de stockage (6) en aval de l'entrée des marchandises (4) avec des rayonnages (10) pour le stockage des palettes de transport chargées, et
une zone de préparation des commandes (8) avec des moyens de prélèvement des différentes marchandises ou emballages ainsi que pour composer à partir de ceux-ci les emballages de transport,
le parcours du flux des marchandises (W) entre l'entrée des marchandises (4) et la sortie des marchandises (5) suivant un tronçon d'aller (W₁) et un tronçon de retour (W₂) parallèle à celui-ci, à la manière d'un « U », les extrémités libres du tronçon d'aller et du tronçon de retour étant formées par l'entrée des marchandises (4), respectivement la sortie des marchandises (5), et la zone de stockage (6) se trouvant sur le tronçon d'aller (W₁) et la zone de préparation des commandes (8) sur le tronçon de retour (W₂), **caractérisé en ce que** la zone de préparation des commandes (8) se compose de :
un magasin pour préparation des commandes (17) avec un grand nombre d'allées de magasin (18) s'étendant à l'intérieur parallèlement les unes aux autres pour les marchandises à préparer, dans chaque allée (18) se trouvant uniquement des marchandises de même type,
une zone d'équipement à une extrémité des allées de magasin (18) avec des moyens (16a) pour stocker de nouvelles marchandises dans les allées de magasin (18) correspondantes, et
des dispositifs de prélèvement (19) à l'autre extrémité des allées de magasin (18) pour transférer, de manière commandée par ordinateur, des marchandises individuelles depuis les allées de magasin (18) sur des dispositifs de transport (20) aval, chaque allée de magasin (18) étant dotée de son propre dispositif de prélèvement (19) pouvant être actionné indépendamment des autres dispositifs de prélèvement, et **en ce que**
il est prévu un poste terminal de dépalettisation (7), disposé dans le flux des marchandises entre la zone de stockage (6) et la zone de préparation des commandes (8), pour décharger les palettes de transport prélevées de la zone de stockage (6).

2. Système selon la revendication 1, **caractérisé en ce que** le poste terminal de dépalettisation (7) est disposé avec la zone de préparation des commandes (8) sur le tronçon de retour (W₂) du parcours en U du flux des marchandises (W).

3. Système selon la revendication 2, **caractérisé par** au moins une voie de transport (13) menant du poste terminal de dépalettisation (7) au magasin de préparation des commandes (17), réalisée de préférence sur au moins une partie de sa longueur en tant que voie à rouleaux, pour de nouvelles marchandises à stocker, laquelle s'étend, par un tronçon de voie (16), le long du magasin de préparation des commandes (17).

4. Système selon la revendication 3, **caractérisé en ce que** les moyens (16a) pour stocker de nouvelles marchandises dans les allées de magasin coopèrent avec le tronçon de voie (16) de la voie de transport (13) menant du poste terminal de dépalettisation (7) au magasin de préparation des commandes (17).

5. Système selon la revendication 4, **caractérisé en ce que** le moyen de stockage de nouvelles marchandises dans l'allée de magasin (18) est un convoyeur transversal (16a) dont le sens de transport est dirigé vers la voie de magasin (18).

6. Système selon la revendication 5, **caractérisé en ce qu'**à chaque allée de magasin (18) est associé son propre convoyeur transversal (16a).

7. Système selon l'une des revendications 1 à 6, **caractérisé en ce que** le long des dispositifs de prélèvement (19) s'étend un dispositif de convoyage (20), entraîné en permanence, pour les marchandises prélevées des allées de magasin (18).

8. Système selon la revendication 7, **caractérisé en ce que** le dispositif de convoyage (20) se trouve plus près de la zone de stockage (6) que la voie de transport (13) menant aux magasins de préparation des commandes ( 17).

9. Système selon l'une des revendications 1 à 8, **caractérisé en ce que** le dispositif de convoyage (20) pour les marchandises prélevées mène à au moins une table d'empaquetage (21) allongée qui s'étend transversalement au tronçon de retour (W₂) du flux des marchandises (W).
